# EUROPEAN PATENT SPECIFICATION

(11) **EP 1 197 858 B1**
(45) Date of publication and mention of the grant of the patent: **06.02.2008**
(21) Application number: 00308910.9
(22) Date of filing: 10.10.2000
(51) Int. Cl.: G06F 9/50, G06F 11/34

(54) **Method and device for offering resources in an internet appliance**
Verfahren und Gerät zum Anbieten von Betriebsmitteln in einem Internet-Gerät
Procédé et dispositif pour offrir des ressources dans un appareil internet

(43) Date of publication of application: 17.04.2002
(73) Proprietor: Hewlett-Packard Company A Delaware Corporation, Palo Alto, CA 94304 (US)
(72) Inventor: Watkins, Mark Robert, Westbury Park, Bristol BS6 7SR (GB)
(74) Representative: Lawman, Matthew John Mitchell

(56) References cited:
- US-A- 5 684 945
- US-A- 5 771 354
- US-A- 6 112 243
- ALMOND J ET AL: "UNICORE: uniform access to supercomputing as an element of electronic commerce" FUTURE GENERATIONS COMPUTER SYSTEMS,ELSEVIER SCIENCE PUBLISHERS. AMSTERDAM,NL, vol. 15, no. 5-6, October 1999 (1999-10), pages 539-548, XP004176744 ISSN: 0167-739X

## Description

The invention relates to an e-appliance and to the augmentation of the resources of the e-appliance. An e-appliance is defined broadly as a computer for performing data processing and is adapted for communication with remote services. An e-appliance may be a sealed unit or have otherwise unmodifiable hardware and or software.

An example of an e-appliance is a server in a client-server system. Presently, servers are not usually off-the-shelf units, due to the variation in the capabilities required by the users of servers. A server is normally assembled from selected processing and storage resources, which have been selected with regard to the forecasted demands on the server. A database can also be implemented as an e-appliance, and will similarly be a bespoke unit, assembled from components selected by the system manager or designer having regard to the demands on the database. Clearly, it is time-consuming and expensive to create bespoke e-appliances in this way. Furthermore, when the demands on such an e-appliance increase, the e-appliance needs to be rebuilt to meet the new requirements.

US 5,684,945 describes a tool for diagnosing a poorly performing data processing system, such as a client-server system. The tool captures performance statistics of the data processing system and compares these statistics against known problematic statistics, such that possible causes of the poor performance may be identified.

US 6,112,243 describes a distributed system comprising client computers, resource providers and a server that allocates the resources of the providers to the clients. A client that needs processing in order to perform a particular task sends a request for service to the server. The server then matches the request for service to one of the resource providers and transfers the task of the client to that resource provider. The resource provider then performs the task and returns the results back to the server, which in turn delivers the results back to the client.

It is an object of the present invention to ameliorate the problems associated with creating, maintaining and updating e-appliances.

According to one aspect, the invention provides a computer connectable to a remote server, the computer comprising: resources for performing data processing functions; and a detector operable to: monitor the resources of the computer and detect a predetermined condition indicative of a lack of resources; offer to a user additional resources in response to detecting the predetermined condition; receive a user input; and utilise, in response to the user input, resources of the remote server to augment the resources of the computer.

According to another aspect, the invention provides a method of augmenting the resources of a computer, the computer being connectable to a remote server and having resources for performing data processing functions, the method comprising: monitoring the resources of the computer and detecting a predetermined condition indicative of a lack of resources; offering to a user additional resources in response to detecting the predetermined condition; receiving a user input; and utilising, in response to the user input, resources of the remote server to augment the resources of the computer.

Preferably, the user's response to said offer is communicated by the computer to remote services for appropriate action. These services may be provided by an internet service provider ISP, who may be the sole ISP for the user, or may be an ISP selected from a number of possible ISPs, for example, via a brokering service.

The invention therefore provides for the servicing of a lack of resources in a timely and efficient manner.

It will be appreciated that the lack of resources may be a real need or a perceived need depending upon the predetermined condition set up to indicate said lack of resources.

The lack of resources may be caused by a failure of resources associated with the e-appliance or by use of the e-appliance exceeding its resources. The lacked resources may be the ability to store data or the ability to process data; for example, the ability to handle e-mail or the ability to back-up data. The lacked resources may be hardware resources, or resources used to support the running of application programmes (in which case the resources would also include, for example, operating system software in addition to hardware).

The predetermined condition detected by the e-appliance may be modifiable, or alternatively or additionally, there may be a group of predetermined conditions, each of which may trigger an offer of a respective service.

In one embodiment, it is arranged that the offer of the service is provided a period prior to the condition occurring. The period may be determined so as to enhance the attractiveness of the offer to the user. For example, a system manager may not pay much attention to an offer of extra memory when he has sufficient free memory to last three months, whereas he may be more receptive to an offer of extra memory when he has only three days' worth of spare memory.

The computer, referred to hereafter as an e-appliance, may take different forms. For example, it may be a business operation tool, a server, a database system, an e-mail system or a data storage system. In one embodiment, the hardware of the e-appliance is unmodifiable.

To aid the understanding of the invention, certain embodiments of the invention will now be described, by way of example only, with reference to the accompanying drawing showing a block diagram illustrating an e-appliance and its connection to a service provider.

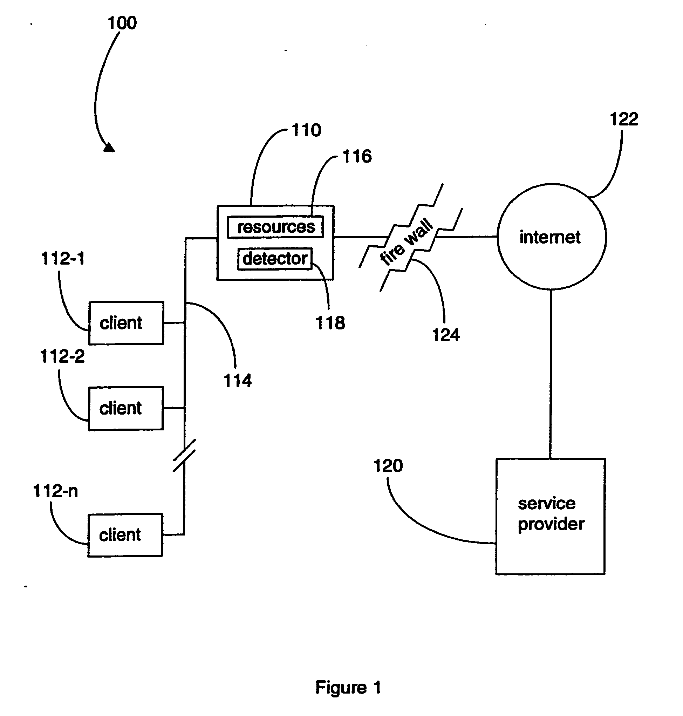

The computer system 100 of Figure 1 comprises an e-appliance 110 (in this example a server) which services a number of client computers 112-1 to 112-n. The e-appliance 110 is connected to the client computers 112-1 to 112-n by a local area network (LAN) 114. The e-appliance 110 comprises a group of resources 116 which it uses to service the requests from the client computers 112-1 to 112-n. The e-appliance 110 also comprises a detector 118. The detector 118 provides an offer to the manager of the e-appliance 110 (i.e., the system manager responsible for LAN 114) upon the occurrence of a certain condition and, upon acceptance of the offer by the manager, sends a request to a service provider 120. The operation of the detector 118 will be described in detail later. In order to transmit the request to the service provider 120, the e-appliance 110 is connected to the internet 122, through which the request reaches the service provider 120. The e-appliance 110 has a fire wall 124 between itself and the internet to maintain the security of the LAN 114.

In a first set of embodiments, the detector 118 is arranged to respond to a lack of resources within the e-appliance. Upon detecting that the e-appliance 110 will shortly exceed the capabilities of its resources 116, the detector 118 presents to the system manager an offer for the service provider 120 to augment the resources 116 of the e-appliance 110. If the system manager accepts the offer, then detector 118 communicates the acceptance via the fire wall 124 and internet 122 to the service provider 120. In response, the service provider makes available extra resources which the e-appliance 110 may then utilise via the internet 122. Therefore, the service provider becomes a virtual extension of the e-appliance 110. Of course, the service provider may allocate resources to other e-appliances connected to it via the internet 122. Therefore, service provider 120 forms a virtual extension of a number of distinct computer systems. The service provider invoices the system manager of LAN 114 for the extra resources allocated to e-appliance 110.

The detector 118 times the offer to the system manager to enhance the attractiveness of the offer. For example, the detector 118 may determine that a lack of resources event will occur at a certain point in time in the future. The detector 118 may wait until a certain period of time before the anticipated lack of resources event before making the offer to the system manager. This ensures that the issue of the lack of resources is at the forefront of the system manager's mind. Of course, it is possible for the detector (either alternatively or additionally) to respond immediately upon forecasting a lack of resources event, or subsequent to the occurrence of the lack of resources. For example, the offer may be made or repeated after the e-appliance 110 has attempted to exceed the capabilities of its resources 116 or where all or part of the resources 116 within the e-appliance 110 have failed causing a shortfall in the resources available. The nature of the resources in question will now be discussed by reference to a non-limiting series of examples (to which extensions and alternatives will be readily apparent to the skilled person).

In one embodiment, the detector 118 may forecast that the e-appliance 110 will shortly run out of memory space. The detector offers additional memory space (at service provider 120) to the system manager. If the system manager accepts, then extra memory is made available at the service provider 120.

In another embodiment, the detector 118 may forecast that the e-appliance 110 will shortly lack the ability to process, at a sufficient speed, jobs that it receives from the client computers 112-1 to 112-n or that arise in the e-appliance itself. The detector may offer the system manager processing resources at the service provider 120. If the system manager accepts, then additional processing resources are made available at the service provider and thereafter jobs from the client computers 112-1 to 112-n or jobs arising in the e-appliance itself may be transferred to service provider 120 for execution there to ease the burden on the processing resources of the e-appliance 110.

In a further embodiment, the detector 118 detects that the amount of data stored in e-appliance 110 that has not been backed-up has exceeded a threshold value. The detector 118 then asks the system manager if he wishes this vulnerable data to be backed-up on the service provider 120. If the system manager accepts this offer, then the vulnerable data is backed-up on the service provider 120.

In yet another embodiment, the e-appliance 110 has e-mail resources which are capable of managing a maximum number of e-mail accounts. When a client computer is introduced to the LAN 114, one of the e-mail accounts is allocated to that client computer. The situation will arise where the maximum number of e-mail accounts that can be managed by the resources 116 has been reached. If a further client computer is then added to the system, clearly there will be a lack of resources. Here, the detector monitors the number of e-mail accounts remaining at e-appliance 110, and when there are few unused accounts left, the detector asks the system manager if he desires the number of e-mail accounts available at e-appliance 110 to augmented by the making available of further e-mail accounts at service provider 120. If the system manager accepts, then further e-mail accounts are made available at service provider 120, and the number of e-mail accounts available within LAN 114 is correspondingly increased.

Hence, it will be seen that the e-appliance 110 can be augmented with the assistance of the service provider 120. This facilitates the manufacture of the e-appliance 110 as an off-the-shelf unit. Subsequently, if its abilities need to be tailored in some way, then this can be achieved with the aid of the service provider.

The condition or event to which the detector 118 responds may be modifiable. For example, it may be selectable from a menu provided by the e-appliance 110 to the system manager or it may be set remotely and dynamically by the system provider 120 or it may be set during the manufacture of the e-appliance.

## Claims

1. A computer (110) connectable to a remote server (120), the computer comprising:
resources (116) for performing data processing functions; and
a detector (118) operable to:
monitor the resources of the computer and detect a predetermined condition
indicative of a lack of resources;
**characterised in that** the detector is further operable to:
offer to a user additional resources in response to detecting the predetermined condition;
receive a user input; and
utilise, in response to the user input, resources of the remote server to augment the resources of the computer.

2. A computer according to claim 1, wherein the detector is operable to detect the predetermined condition in response to failure of at least part of the resources of the computer.

3. A computer according to claim 1 or 2, wherein the detector is operable to detect the predetermined condition in response to the computer attempting to exceed the resources.

4. A computer according to any preceding claim, wherein the detector is operable to detect the predetermined condition in response to forecasting that the resources of the computer will be exceeded.

5. A computer according to claim 4, wherein the detector is operable to offer the additional resources a period of time prior to the time at which the computer is forecast to exceed the resources.

6. A computer according to claim 5, wherein the detector is operable to repeat the offer of the additional resources in response to an attempt by the computer to exceed the resources.

7. A computer according to any preceding claim, wherein the resources are at least one of the ability to store data, the ability to process data, the ability to handle e-mail and the ability to back-up data.

8. A computer according to any preceding claim, wherein the resources are hardware resources.

9. A computer according to any preceding claim, wherein the predetermined condition is modifiable.

10. A computer according to any preceding claim, wherein the detector is operable to:
detect one of a group of predetermined conditions, each predetermined condition indicative of a lack of resources; and
offer to a user additional resources in response to detecting a respective predetermined condition.

11. A computer according to any preceding claim, wherein the computer is a sealed unit having unmodifiable hardware.

12. A computer according to any preceding claim which is one of a server, a database system, an e-mail system and a data storage system.

13. A method of augmenting the capabilities of a computer (110), the computer being connectable to a remote server (120) and having resources for performing data processing functions, the method comprising:
monitoring the resources (116) of the computer and detecting a predetermined
condition indicative of a lack of resources;
**characterised in that** the method further comprises:
offering to a user additional resources in response to detecting the predetermined condition;
receiving a user input; and
utilising, in response to the user input, resources of the remote server to augment the resources of the computer.

14. A method according to claim 13, wherein detecting a predetermined condition comprises detecting a failure of at least part of the resources of the computer.

15. A method according to claim 13 or 14, wherein detecting a predetermined condition comprises detecting an attempt by the computer to exceed the resources of the computer.

16. A method according to any one of claims 13 to 15, wherein detecting a predetermined condition comprises forecasting that the resources of the computer will be exceeded.

17. A method according to claim 16, wherein offering the additional resources is performed a period of time prior to the time at which the computer is forecast to exceed the resources.

18. A method according to claim 17, further comprising offering again the additional resources in response to an attempt by the computer to exceed the resources.

19. A method according to any one of claims 13 to 18, wherein the resources are at least one of the ability to store data, the ability to process data, the ability to handle e-mail and the ability to back-up data.

20. A method according to any one of claims 13 to 19, wherein the resources are hardware resources.

21. A method according to any one of claims 13 to 20, wherein the predetermined condition is modifiable.

22. A method according to any one of claims 13 to 21, comprising:
detecting one of a group of predetermined conditions, each predetermined condition indicative of a lack of resources; and
offering to a user additional resources in response to detecting a respective predetermined condition.

## Patentansprüche

1. Ein Computer (110), der mit einem entfernten Server (120) verbindbar ist, wobei der Computer folgende Merkmale aufweist:
Betriebsmittel (116) zum Durchführen von Datenverarbeitungsfunktionen; und
einen Detektor (118), der wirksam ist, um:
die Betriebsmittel des Computers zu überwachen und eine vorbestimmte Bedingung, die einen Mangel an Betriebsmitteln anzeigt, zu erfassen;
**dadurch gekennzeichnet, dass** der Detektor ferner wirksam ist, um:
einem Benutzer ansprechend auf ein Erfassen der vorbestimmten Bedingung zusätzliche Betriebsmittel anzubieten;
eine Benutzereingabe zu empfangen; und
ansprechend auf die Benutzereingabe Betriebsmittel des entfernten Servers zu nutzen, um die Betriebsmittel des Computers zu vergrößern.

2. Ein Computer gemäß Anspruch 1, bei dem der Detektor wirksam ist, um die vorbestimmte Bedingung ansprechend auf einen Ausfall von zumindest einem Teil der Betriebsmittel des Computers zu erfassen.

3. Ein Computer gemäß Anspruch 1 oder 2, bei dem der Detektor wirksam ist, um die vorbestimmte Bedingung ansprechend darauf zu erfassen, dass der Computer versucht, die Betriebsmittel zu überschreiten.

4. Ein Computer gemäß einem der vorhergehenden Ansprüche, bei dem der Detektor wirksam ist, um die vorbestimmte Bedingung ansprechend auf ein Vorhersagen, dass die Betriebsmittel des Computers überschritten werden, zu erfassen.

5. Ein Computer gemäß Anspruch 4, bei dem der Detektor wirksam ist, um die zusätzlichen Betriebsmittel einen Zeitraum vor der Zeit anzubieten, zu der eine Überschreitung der Betriebsmittel durch den Computer vorausgesagt wird.

6. Ein Computer gemäß Anspruch 5, bei dem der Detektor wirksam ist, um das Angebot der zusätzlichen Betriebsmittel ansprechend auf einen Versuch durch den Computer, die Betriebsmittel zu überschreiten, zu wiederholen.

7. Ein Computer gemäß einem der vorhergehenden Ansprüche, bei dem die Betriebsmittel zumindest eine der Fähigkeit, Daten zu speichern, der Fähigkeit, Daten zu verarbeiten, der Fähigkeit, elektronische Post zu handhaben, und der Fähigkeit, Daten zu sichern, sind.

8. Ein Computer gemäß einem der vorhergehenden Ansprüche, bei dem die Betriebsmittel Hardware-Betriebsmittel sind.

9. Ein Computer gemäß einem der vorhergehenden Ansprüche, bei dem die vorbestimmte Bedingung modifizierbar ist.

10. Ein Computer gemäß einem der vorhergehenden Ansprüche, bei dem der Detektor wirksam ist, um:
eine einer Gruppe vorbestimmter Bedingungen zu erfassen, wobei jede vorbestimmte Bedingung einen Mangel an Betriebsmitteln anzeigt; und
einem Benutzer ansprechend auf ein Erfassen einer jeweiligen vorbestimmten Bedingung zusätzliche Betriebsmittel anzubieten.

11. Ein Computer gemäß einem der vorhergehenden Ansprüche, wobei der Computer eine abgeschlossene Einheit mit nicht modifizierbarer Hardware ist.

12. Ein Computer gemäß einem der vorhergehenden Ansprüche, der ein Element eines Servers, eines Datenbanksystems, eines Email-Systems und eines Datenspeichersystems ist.

13. Ein Verfahren zum Vergrößern der Fähigkeiten eines Computers (110), wobei der Computer mit einem entfernten Server (120) verbindbar ist und Betriebsmittel zum Durchführen von Datenverarbeitungsfunktionen aufweist, wobei das Verfahren folgende Schritte aufweist:
Überwachen der Betriebsmittel (116) des Computers und Erfassen einer vorbestimmten Bedingung, die einen Mangel an Betriebsmitteln anzeigt;
**dadurch gekennzeichnet, dass** das Verfahren ferner folgende Schritte aufweist:
Anbieten zusätzlicher Betriebsmittel ansprechend auf ein Erfassen der vorbestimmten Bedingung für einen Benutzer;
Empfangen einer Benutzereingabe; und
Verwenden von Betriebsmitteln des entfernten Servers ansprechend auf die Benutzereingabe, um die Betriebsmittel des Computers zu vergrößern.

14. Ein Verfahren gemäß Anspruch 13, bei dem das Erfassen einer vorbestimmten Bedingung ein Erfassen eines Ausfalls von zumindest einem Teil der Betriebsmittel des Computers aufweist.

15. Ein Verfahren gemäß Anspruch 13 oder 14, bei dem das Erfassen einer vorbestimmten Bedingung ein Erfassen eines Versuchs durch den Computer, die Betriebsmittel des Computers zu überschreiten, aufweist.

16. Ein Verfahren gemäß einem der Ansprüche 13 bis 15, bei dem das Erfassen einer vorbestimmten Bedingung ein Vorhersagen, dass die Betriebsmittel des Computers überschritten werden, aufweist.

17. Ein Verfahren gemäß Anspruch 16, bei dem das Anbieten der zusätzlichen Betriebsmittel einen Zeitraum vor der Zeit durchgeführt wird, zu der ein Überschreiten der Betriebsmittel durch den Computer vorausgesagt wird.

18. Ein Verfahren gemäß Anspruch 17, das ferner ein erneutes Anbieten der zusätzlichen Betriebsmittel ansprechend auf einen Versuch durch den Computer, die Betriebsmittel zu überschreiten, aufweist.

19. Ein Verfahren gemäß einem der Ansprüche 13 bis 18, bei dem die Betriebsmittel zumindest eine der Fähigkeit, Daten zu speichern, der Fähigkeit, Daten zu verarbeiten, der Fähigkeit, elektronische Post zu handhaben, und der Fähigkeit, Daten zu sichern, sind.

20. Ein Verfahren gemäß einem der Ansprüche 13 bis 19, bei dem die Betriebsmittel Hardware-Betriebsmittel sind.

21. Ein Verfahren gemäß einem der Ansprüche 13 bis 20, bei dem die vorbestimmte Bedingung modifizierbar ist.

22. Ein Verfahren gemäß einem der Ansprüche 13 bis 21, das folgende Schritte aufweist:
Erfassen einer einer Gruppe vorbestimmter Bedingungen, wobei jede vorbestimmte Bedingung einen Mangel an Betriebsmitteln anzeigt; und
Anbieten zusätzlicher Betriebsmittel für einen Benutzer ansprechend auf ein Erfassen einer jeweiligen vorbestimmten Bedingung.

## Revendications

1. Ordinateur (110) pouvant être connecté à un serveur distant (120), l'ordinateur comprenant :
■ des ressources (116) pour exécuter des fonctions de traitement de données ; et
■ un détecteur (118) pouvant fonctionner pour :
■ surveiller les ressources de l'ordinateur et détecter une condition prédéterminée indiquant un manque de ressources ;
**caractérisé en ce que** le détecteur peut en outre fonctionner pour :
■ proposer des ressources supplémentaires à un utilisateur en réponse à la détection de la condition prédéterminée ;
■ recevoir une entrée utilisateur ; et
■ utiliser, en réponse à l'entrée utilisateur, les ressources du serveur distant pour augmenter les ressources de l'ordinateur.

2. Ordinateur selon la revendication 1, dans lequel le détecteur peut fonctionner pour détecter la condition prédéterminée en réponse à une panne d'au moins une partie des ressources de l'ordinateur.

3. Ordinateur selon la revendication 1 ou 2, dans lequel le détecteur peut fonctionner pour détecter la condition prédéterminée en réponse à une tentative de dépassement des ressources de l'ordinateur.

4. Ordinateur selon l'une quelconque des revendications précédentes, dans lequel le détecteur peut fonctionner pour détecter la condition prédéterminée en réponse à la prévision d'un dépassement des ressources de l'ordinateur.

5. Ordinateur selon la revendication 4, dans lequel le détecteur peut fonctionner pour proposer les ressources supplémentaires pendant une certaine période avant le moment où il est prévu que l'ordinateur dépassera les ressources.

6. Ordinateur selon la revendication 5, dans lequel le détecteur peut fonctionner pour répéter la proposition des ressources supplémentaires en réponse à une tentative de dépassement des ressources de l'ordinateur.

7. Ordinateur selon l'une quelconque des revendications précédentes, dans lequel les ressources sont au moins une ressource parmi la capacité à mémoriser des données, la capacité à traiter des données, la capacité à gérer une messagerie électronique et la capacité à sauvegarder des données.

8. Ordinateur selon l'une quelconque des revendications précédentes, dans lequel les ressources sont des ressources matérielles.

9. Ordinateur selon l'une quelconque des revendications précédentes, dans lequel la condition prédéterminée est modifiable.

10. Ordinateur selon l'une quelconque des revendications précédentes, dans lequel le détecteur peut fonctionner pour :
■ détecter une condition d'un groupe de conditions prédéterminées, chaque condition prédéterminée indiquant un manque de ressources ; et
■ proposer des ressources supplémentaires à un utilisateur en réponse à la détection d'une condition prédéterminée respective.

11. Ordinateur selon l'une quelconque des revendications précédentes, dans lequel l'ordinateur est une unité isolée ayant un matériel non modifiable.

12. Ordinateur selon l'une quelconque des revendications précédentes qui est un élément parmi un serveur, un système de base de données, un système de messagerie électronique et un système de stockage de données.

13. Procédé pour augmenter les capacités d'un ordinateur (110), l'ordinateur pouvant être connecté à un serveur distant (120) et ayant des ressources pour exécuter des fonctions de traitement de données, le procédé comprenant les étapes consistant à :
■ surveiller les ressources (116) de l'ordinateur et détecter une condition prédéterminée indiquant un manque de ressources ;
■ **caractérisé en ce que** le procédé comprend en outre les étapes consistant à :
■ proposer des ressources supplémentaires à un utilisateur en réponse à la détection de la condition prédéterminée ;
■ recevoir une entrée utilisateur ; et
■ utiliser, en réponse à l'entrée utilisateur, des ressources du serveur distant pour augmenter les ressources de l'ordinateur.

14. Procédé selon la revendication 13, dans lequel la détection d'une condition prédéterminée comprend la détection d'une panne d'au moins une partie des ressources de l'ordinateur.

15. Procédé selon la revendication 13 ou 14, dans lequel la détection d'une condition prédéterminée comprend la détection d'une tentative de dépassement des ressources de l'ordinateur.

16. Procédé selon l'une quelconque des revendications 13 à 15, dans lequel la détection d'une condition prédéterminée comprend la prévision d'un dépassement des ressources de l'ordinateur.

17. Ordinateur selon la revendication 16, dans lequel la proposition de ressources supplémentaires est réalisée pendant une certaine période avant le moment où l'ordinateur prévoit à dépasser ses ressources.

18. Procédé selon la revendication 17, comprenant en outre l'étape consistant à proposer à nouveau les ressources supplémentaires en réponse à une tentative de l'ordinateur à dépasser les ressources.

19. Procédé selon l'une quelconque des revendications 13 à 18, dans lequel les ressources sont au moins une ressource parmi la capacité à mémoriser des données, la capacité à traiter des données, la capacité à gérer une messagerie électronique et la capacité à sauvegarder des données.

20. Procédé selon l'une quelconque des revendications 13 à 19, dans lequel les ressources sont des ressources matérielles.

21. Procédé selon l'une quelconque des revendications 13 à 20, dans lequel la condition prédéterminée est modifiable.

22. Procédé selon l'une quelconque des revendications 13 à 21, comprenant les étapes consistant à :
■ détecter une condition parmi un groupe de conditions prédéterminées, chaque condition prédéterminée indiquant un manque de ressources ; et
■ proposer des ressources supplémentaires à un utilisateur en réponse à la détection d'une condition prédéterminée respective.
